(19)

Europäisches Patentamt
European Patent Office
Office européen des brevets

(11) **EP 4 371 838 A1**

(12) **EUROPEAN PATENT APPLICATION**

(43) Date of publication:
**22.05.2024 Bulletin 2024/21**

(21) Application number: **23210875.3**

(22) Date of filing: **20.11.2023**

(51) International Patent Classification (IPC):
**B60W 50/00** (2006.01)

(52) Cooperative Patent Classification (CPC):
**B60W 30/14; B60W 60/001;** B60W 2050/0095

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.11.2022 CN 202211451675**

(71) Applicant: **Anhui NIO Autonomous Driving Technology Co., Ltd.**
**Hefei, Anhui 230601 (CN)**

(72) Inventor: **SHI, Yafeng**
**Hefei, Anhui Province, 230601 (CN)**

(74) Representative: **Vossius & Partner**
**Patentanwälte Rechtsanwälte mbB**
**Siebertstrasse 3**
**81675 München (DE)**

(54) **METHOD FOR LONGITUDINAL CONTROL OF VEHICLE, COMPUTER DEVICE, STORAGE MEDIUM, AND VEHICLE**

(57) The disclosure relates to the field of autonomous driving technologies, and specifically provides a method for longitudinal control of a vehicle, a computer device, a storage medium, and a vehicle, which are intended to improve the reliability and stability of longitudinal control of a vehicle. The method provided in the disclosure includes: sequentially evaluating establishment conditions for the parking mode, the cruise control mode, the steady-state acceleration/deceleration mode, and the transient-state acceleration/deceleration mode based on planned driving trajectory information of the vehicle, to determine an initial control mode; and performing longitudinal control of the vehicle according to the initial control mode and based on the planned driving trajectory information. The method enables adaptive and smooth switch between different modes based on the planned driving trajectory information when the vehicle is controlled for autonomous driving, covering various autonomous driving tasks such as high-speed cruising, vehicle following in urban areas, and automatic parking. Therefore, the reliability and stability of longitudinal control of the vehicle is significantly improved, thus improving the comfort and safety during driving of the vehicle.

Start

Set an intelligent driving control mode for longitudinal control of the vehicle, where the intelligent driving control mode comprises a parking mode, a cruise control mode, a steady-state acceleration/deceleration mode, and a transient-state acceleration/deceleration mode — S101

Obtain planned driving trajectory information of the vehicle within a current control cycle — S102

Sequentially evaluate establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle — S103

Perform longitudinal control of the vehicle within the current control cycle according to the initial control mode and based on the planned driving trajectory information — S104

End

*FIG. 2*

**EP 4 371 838 A1**

## Description

The present application claims priority of CN patent application 202211451675.9 filed on November 21, 2022 with the title "Method for longitudinal control of vehicle, computer device, storage medium, and vehicle".

## Technical Field

The disclosure relates to the field of autonomous driving technologies, and in particular to a method for longitudinal control of a vehicle, a computer device, a storage medium, and a vehicle.

## Background Art

When a vehicle is controlled for point-to-point autonomous driving with integrated traveling and parking, various autonomous driving tasks such as high-speed cruising, vehicle following in urban areas, and automatic parking are often covered. Different autonomous driving tasks may have different requirements for longitudinal control of a vehicle. Therefore, when a vehicle is controlled for point-to-point autonomous driving with integrated traveling and parking, it is necessary to ensure a relatively high reliability and stability of longitudinal control of the vehicle, to improve the comfort and safety during traveling of the vehicle.

Accordingly, there is a need for a new technical solution in the field to solve the above problem.

## Summary

To overcome the above defect, the disclosure is proposed to provide a method for longitudinal control of a vehicle, a computer device, a storage medium, and a vehicle, in order to solve or at least partially solve the technical problem of how to improve the reliability and stability of longitudinal control of a vehicle when controlling the vehicle for point-to-point autonomous driving with integrated traveling and parking.

In a first aspect, a method for longitudinal control of a vehicle is provided, the method including:

setting an intelligent driving control mode for longitudinal control of the vehicle, where the intelligent driving control mode includes a parking mode, a cruise control mode, a steady-state acceleration/deceleration mode, and a transient-state acceleration/deceleration mode;

obtaining planned driving trajectory information of the vehicle within a current control cycle;

sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle; and

performing longitudinal control of the vehicle within the current control cycle according to the initial control mode and based on the planned driving trajectory information.

In a technical solution of the above method for longitudinal control of a vehicle, the planned driving trajectory information includes a plurality of target points arranged in chronological order, each of the target points including at least a target speed and a target acceleration of the vehicle at a moment corresponding to the target point, and the method further includes determining the initial control mode for the current control cycle by:

step S11: determining whether the target speed satisfies the establishment condition for the parking mode; if the target speed satisfies the establishment condition for the parking mode, determining the parking mode as the initial control mode; or if the target speed does not satisfy the establishment condition for the parking mode, proceeding to step S12;

step S12: determining whether the target acceleration satisfies the establishment condition for the cruise control mode; if the target acceleration satisfies the establishment condition for the cruise control mode, determining the cruise control mode as the initial control mode; or if the target acceleration does not satisfy the establishment condition for the cruise control mode, proceeding to step S 13; and step S 13: determining whether a target jerk determined from the target acceleration satisfies the establishment condition for the steady-state acceleration/deceleration mode; if the target jerk satisfies the establishment condition for the steady-state acceleration/deceleration mode, determining the steady-state acceleration/deceleration mode as the initial control mode; or if the target jerk does not satisfy the establishment condition for the steady-state acceleration/deceleration mode, determining the transient-state acceleration/deceleration mode as the initial control mode.

In a technical solution of the above method for longitudinal control of a vehicle, the method further includes determining whether a driving trajectory parameter $p_{cur}$ of the vehicle within the current control cycle satisfies an establishment condition for its corresponding intelligent driving control mode by:

determining a lower limit $e_{th1}$ and an upper limit $e_{th2}$ of a parameter threshold, respectively, based on a type of the driving trajectory parameter $p_{cur}$; comparing the driving trajectory parameter $p_{cur}$ with the lower limit $e_{th1}$ and the upper limit $e_{th2}$ of the parameter threshold; if $p_{cur} < e_{th1}$ and this lasts for a preset duration, determining that the establishment condition is satisfied; if $e_{th1} \leq p_{cur} \leq e_{th2}$ and an initial control mode for a previous control cycle is also the initial control mode corresponding to the driving trajectory parameter $p_{cur}$, determining that the establishment condition is satisfied; or if $p_{cur} > e_{th2}$, determining that the establishment condition is not satisfied, where when the driving trajectory parameter $p_{cur}$ is the target speed, the target acceleration, and the target jerk, respectively, the initial control mode corresponding to the driving trajectory parameter $p_{cur}$ is the parking mode, the cruise control mode, and the steady-state acceleration/deceleration mode, respectively.

In a technical solution of the above method for longitudinal control of a vehicle, the step of "setting an intelligent driving control mode for longitudinal control of the vehicle" specifically includes:

step S21: setting an initial strategy for the intelligent driving control mode by:

obtaining planned driving trajectory information of the vehicle, where the planned driving trajectory information includes a plurality of target points arranged in chronological order, each of the target points including at least a target position, a target speed, and a target acceleration of the vehicle at a moment corresponding to the target point;
performing proportional control on a position error determined based on the target position and an actual position of the vehicle to obtain a speed compensation value, performing proportional control on a speed error determined based on the target speed and an actual speed of the vehicle and the speed compensation value to obtain an acceleration compensation value, and performing proportional control on an acceleration error determined based on the target acceleration and an actual acceleration of the vehicle and the acceleration compensation value to obtain an acceleration feedback torque;
obtaining a compensated target acceleration based on the target acceleration of the vehicle and the acceleration compensation value, using a product of the compensated target acceleration and a vehicle mass as an acceleration resistance torque, and using a sum of the acceleration resistance torque and a driving resistance torque of the vehicle as an acceleration feedforward torque; and
determining a wheel torque of the vehicle based on the acceleration feedback torque and the acceleration feedforward torque;

step S22: using the initial strategy as a control strategy for the transient-state acceleration/deceleration mode, to form the transient-state acceleration/deceleration mode; and
step S23: adjusting the step of "determining a wheel torque of the vehicle based on the acceleration feedback torque and the acceleration feedforward torque" to form the parking mode, the cruise control mode, and the steady-state acceleration/deceleration mode, respectively, by:

performing integral control on the position error to obtain a position error integral torque, and determining the wheel torque of the vehicle based on the acceleration feedback torque, the acceleration feedforward torque, and the position error integral torque, to form the parking mode;
performing integral control on the speed error to obtain a speed error integral torque, and determining the wheel torque of the vehicle based on the acceleration feedback torque, the acceleration feedforward torque, and the speed error integral torque, to form the cruise control mode; and
performing integral control on the acceleration error to obtain an acceleration error integral torque, and determining the wheel torque of the vehicle based on the acceleration feedback torque, the acceleration feedforward torque, and the acceleration error integral torque, to form the steady-state acceleration/deceleration mode.

In a technical solution of the above method for longitudinal control of a vehicle, the method further includes:
using the initial strategy as a control strategy for a longitudinal override mode for longitudinal control of the vehicle, to form the longitudinal override mode;
before the step of "sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle", the method further includes:

determining whether an establishment condition for the longitudinal override mode is satisfied, where the establishment condition includes that torque request information of an accelerator pedal of the vehicle is greater than torque request information determined from the planned driving trajectory information or that a torque intervention instruction output by a chassis stability control system of the vehicle is received, and the torque request information includes acceleration information;

if the establishment condition for the longitudinal override mode is satisfied, using the longitudinal override mode as the initial control mode for the current control cycle, performing longitudinal control of the vehicle within the current control cycle according to the initial control mode and based on the torque request information of the accelerator pedal of the vehicle or the torque intervention instruction, and not performing the step of "sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle" and the step of "performing longitudinal control of the vehicle within the current control cycle according to the initial control mode and based on the planned driving trajectory information"; or

if the establishment condition for the longitudinal override mode is not satisfied, continuing with the step of "sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle";

and/or the step of "setting an initial strategy for the intelligent driving control mode" further includes:

upon detecting that an energy recovery torque provided by a motor on the vehicle cannot meet a demand of the wheel torque of the vehicle, generating a brake pressure instruction based on the energy recovery torque, the wheel torque, and the compensated target acceleration, and sending the brake pressure instruction to a brake control unit of the vehicle, such that the brake control unit is able to control the vehicle to decelerate according to the brake pressure instruction.

In a technical solution of the above method for longitudinal control of a vehicle, when the initial control mode for the current control cycle and an initial control mode for a previous control cycle are both intelligent driving control modes and the initial control mode for the current control cycle is the parking mode or the cruise control mode or the steady-state acceleration/deceleration mode, before the step of "performing longitudinal control of the vehicle within the current control cycle according to the initial control mode and based on the planned driving trajectory information", the method further includes correcting the initial control mode for the current control cycle by:

determining whether the initial control mode for the current control cycle is the same as the initial control mode for the previous control cycle;

if the initial control mode for the current control cycle is the same as the initial control mode for the previous control cycle, making no correction; or

if the initial control mode for the current control cycle is not the same as the initial control mode for the previous control cycle, making corrections by:

obtaining a previous-cycle wheel torque at the time of longitudinal control of the vehicle in the previous control cycle;

obtaining the acceleration feedback torque and the acceleration feedforward torque obtained by performing longitudinal control of the vehicle based on the initial control mode and the planned driving trajectory information for the current control cycle;

calculating an initial value of integral control based on the previous-cycle wheel torque, the acceleration feedback torque, and the acceleration feedforward torque by using the following formula,

$$I = Tqpre - Tqfb - Tqff$$

where $I$ represents the initial value of integral control, and $Tqpre$, $Tqfb$, and $Tqff$ represent the previous-cycle wheel torque, the acceleration feedback torque, and the acceleration feedforward torque, respectively; and performing integral control on an error term based on the initial value of integral control to obtain an error term integral torque, and determining the wheel torque of the vehicle based on the acceleration feedback torque, the acceleration feedforward torque, and the error term integral torque, to form a corrected initial control mode, where when the initial control mode is the parking mode, the cruise control mode, and the steady-state acceleration/deceleration mode, respectively, the error term is the position error, the speed error, and the acceleration error, respectively, and the error term integral torque is the position error integral torque, the speed error integral torque, and the acceleration error integral torque, respectively.

In a technical solution of the above method for longitudinal control of a vehicle, the method further includes correcting the initial control mode for the current control cycle when torque transition control is not performed in the current control cycle by:

determining whether an entry condition for torque transition control is satisfied in the current control cycle;
if the entry condition for torque transition control is satisfied in the current control cycle, initiating a new round of torque transition control and correcting the initial control mode for the current control cycle to a transition control mode; or if the entry condition for torque transition control is not satisfied in the current control cycle, not initiating a new round of torque transition control and making no correction to the initial control mode for the current control cycle,
where the transition control mode is: correcting, based on the previous-cycle wheel torque of the vehicle obtained in the previous control cycle and a preset torque change slope, a current-cycle wheel torque obtained based on the initial control mode and the planned driving trajectory information for the current control cycle, to narrow a gap between the previous-cycle wheel torque and the current-cycle wheel torque, and thereby perform longitudinal control of the vehicle based on the corrected current-cycle wheel torque;
and where if the initial control mode for the current control cycle contains an error term, the initial control mode is controlled to stop integral control of the error term, and when the initial control mode is the parking mode, the cruise control mode, and the steady-state acceleration/deceleration mode, respectively, the error term is the position error, the speed error, and the acceleration error, respectively; and
the entry condition includes that the initial control modes for the current control cycle and the previous control cycle are the intelligent driving control mode and the longitudinal override mode, respectively, or the current control cycle is the first control cycle for longitudinal control of the vehicle, or the initial control mode for the current control cycle is the transient-state acceleration/deceleration mode and the initial control mode for the previous control cycle is the parking mode or the cruise control mode or the steady-state acceleration/deceleration mode;
and/or the method further includes correcting the initial control mode for the current control cycle when torque transition control is performed in the current control cycle by:

determining whether the entry condition and an exit condition for torque transition control are satisfied in the current control cycle;
if both the entry condition and the exit condition are satisfied, making no correction to the initial control mode for the current control cycle and ending this round of torque transition control;
if the entry condition is satisfied and the exit condition is not satisfied, correcting the initial control mode for the current control cycle to the transition control mode;
if the entry condition is not satisfied and the exit condition is satisfied, making no correction to the initial control mode for the current control cycle and ending this round of torque transition control; or
if neither the entry condition nor the exit condition is satisfied, correcting the initial control mode for the current control cycle to a control mode actually used in the previous control cycle, where the control mode actually used is the initial control mode or the transition control mode,
where the exit condition includes that
an absolute value of a deviation between wheel torques before and after corrections corresponding to the previous control cycle of the current control cycle is less than a preset deviation threshold, and
an absolute value of a deviation between wheel torques before and after corrections corresponding to the second control cycle counted down from the current control cycle is greater than or equal to a preset deviation threshold.

In a second aspect, a computer device is provided. The computer device includes a processor and a storage apparatus adapted to store a plurality of pieces of program code, where the program code is adapted to be loaded and run by the processor to perform the method for longitudinal control of a vehicle in any one of the above technical solutions of the method for longitudinal control of a vehicle.
In a third aspect, a computer-readable storage medium is provided. The computer-readable storage medium has a plurality of pieces of program code stored therein, where the program code is adapted to be loaded and run by a processor to perform the method for longitudinal control of a vehicle in any one of the above technical solutions of the method for longitudinal control of a vehicle.
In a fourth aspect, a vehicle is provided, the vehicle including the computer device described in the above technical solution of the computer device.
The above one or more technical solutions of the disclosure have at least one or more of the following beneficial effects:
In implementing the technical solutions of the disclosure, the intelligent driving control mode for longitudinal control of the vehicle can first be set, where the intelligent driving control mode includes the parking mode, the cruise control mode,

EP 4 371 838 A1

the steady-state acceleration/deceleration mode, and the transient-state acceleration/deceleration mode; then, for each control cycle, longitudinal control of the vehicle can be performed by: obtaining the planned driving trajectory information of the vehicle within the current control cycle; the establishment conditions for the parking mode, the cruise control mode, the steady-state acceleration/deceleration mode, and the transient-state acceleration/deceleration mode are sequentially evaluated based on the planned driving trajectory information, to determine one intelligent driving control mode as the initial control mode for the current control cycle; and finally, longitudinal control of the vehicle can be performed within the current control cycle according to the initial control mode and based on the planned driving trajectory information.

With the above implementation, different intelligent driving control modes can be switched adaptively and smoothly based on planned driving trajectory information when a vehicle is controlled for point-to-point autonomous driving with integrated traveling and parking, even if various autonomous driving tasks such as high-speed cruising, vehicle following in urban areas, and automatic parking are covered. Therefore, the reliability and stability of longitudinal control of the vehicle can be significantly improved, thus improving the comfort and safety during traveling of the vehicle.

Further, in implementing the technical solution of the disclosure, when the current control cycle has a different initial control mode from the previous control cycle, a correction determination may also be made as to the initial control mode for the current control cycle and corrections may be selectively made based on a determination result, to avoid the problem of the safety and comfort of the vehicle being reduced due to a large variation in the wheel torque of the vehicle as a result of a change in the type of control modes for the preceding and following control cycles.

To be specific, when the initial control mode for the current control cycle and the initial control mode for the previous control cycle are each an intelligent driving control mode and the initial control mode for the current control cycle is the parking mode or the cruise control mode or the steady-state acceleration/deceleration mode, the initial value of integral control can be calculated based on the previous-cycle wheel torque, and the acceleration feedback torque and the acceleration feedforward torque for the current control cycle, integral control can be performed on the error term in the initial control mode based on the initial value of integral control to obtain the error term integral torque, and the wheel torque of the vehicle can be determined based on the acceleration feedback torque, the acceleration feedforward torque, and the error term integral torque, to form the corrected initial control mode.

When the initial control modes for the current control cycle and the previous control cycle are the intelligent driving control mode and the longitudinal override mode, respectively, or the current control cycle is the first control cycle for longitudinal control of the vehicle, or the initial control mode for the current control cycle is the transient-state acceleration/deceleration mode and the initial control mode for the previous control cycle is the parking mode or the cruise control mode or the steady-state acceleration/deceleration mode, the current-cycle wheel torque obtained based on the initial control mode and the planned driving trajectory information for the current control cycle can be corrected based on the previous-cycle wheel torque of the vehicle obtained in the previous control cycle and the preset torque change slope, to narrow a gap between the previous-cycle wheel torque and the current-cycle wheel torque, and thereby perform longitudinal control of the vehicle based on the corrected current-cycle wheel torque.

## Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:

FIG. 1 is a schematic diagram of a control principle for longitudinal control of a vehicle;
FIG. 2 is a schematic flowchart of main steps of a method for longitudinal control of a vehicle according to an embodiment of the disclosure;
FIG. 3 is a schematic flowchart of main steps of a method for determining an initial control mode for a current control cycle from an intelligent driving control mode, according to an embodiment of the disclosure;
FIG. 4 is a schematic flowchart of main steps of a method for setting an intelligent driving control mode for longitudinal control of a vehicle, according to an embodiment of the disclosure;
FIG. 5 is a schematic logic block diagram of an initial strategy for an intelligent driving control mode according to an embodiment of the disclosure;
FIG. 6 is a schematic logic block diagram of a control strategy for a parking mode according to an embodiment of the disclosure;
FIG. 7 is a schematic logic block diagram of a control strategy for a cruise control mode according to an embodiment of the disclosure;
FIG. 8 is a schematic logic block diagram of a control strategy for a steady-state acceleration/deceleration mode according to an embodiment of the disclosure;
FIG. 9 is a schematic flowchart of main steps of a method for correcting an initial control mode for a current control cycle, according to an embodiment of the disclosure;

6

FIG. 10 is a schematic block diagram of a main structure of a computer device according to an embodiment of the disclosure; and
FIG. 11 is a schematic diagram of a hardware structure of a computer device according to an embodiment of the disclosure.

Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, "processor" may include hardware, software or a combination of both. The processor may be a central processing unit, a microprocessor, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory. The term "A and/or B" indicates all possible combinations of A and B, for example, only A, only B, or A and B.

Some terms in the disclosure are explained herein first.

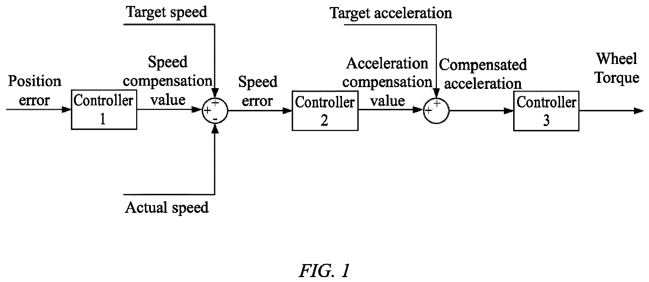

Longitudinal control of a vehicle mainly involves control of a position, a speed, and an acceleration of a vehicle. As shown in FIG. 1, during a longitudinal control process, a position error of the vehicle position can be input into a controller 1 to obtain a speed compensation value; an actual vehicle speed can be subtracted from a sum of a target vehicle speed and the speed compensation value to obtain a speed error; the speed error can be input into a controller 2 to obtain an acceleration compensation value; and a sum of a target acceleration and the acceleration compensation value can be input, as a compensated acceleration, into a controller 3 to obtain a wheel torque. Torque control of vehicle wheels based on the wheel torque can allow an actual position, an actual speed, and an actual acceleration of the vehicle to reach a target position, a target speed, and a target acceleration, respectively.

First, the method for longitudinal control of a vehicle according to an embodiment of the disclosure is explained.

I. First embodiment of the method for longitudinal control of a vehicle

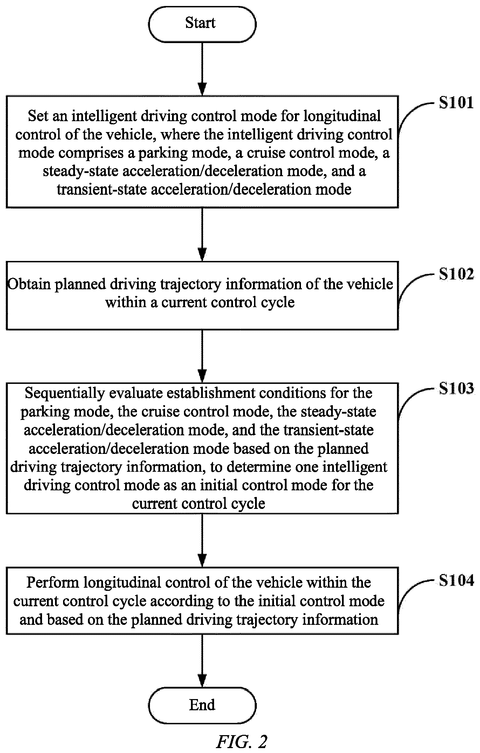

Referring to FIG. 2, FIG. 2 is a schematic flowchart of main steps of a method for longitudinal control of a vehicle according to an embodiment of the disclosure. As shown in FIG. 2, the method for longitudinal control of a vehicle in this embodiment of the disclosure mainly includes steps S101 to S 104 below.

In step S101, an intelligent driving control mode for longitudinal control of the vehicle is set, where the intelligent driving control mode may include a parking mode, a cruise control mode, a steady-state acceleration/deceleration mode, and a transient-state acceleration/deceleration mode.

The parking mode is a longitudinal control mode for the purpose of parking. The cruise control mode is a longitudinal control mode for the purpose of maintaining a vehicle speed constant at a target speed. The steady-state acceleration/deceleration mode is a longitudinal control mode for the purpose of controlling the vehicle to accelerate or decelerate in a gradual and steady manner, instead of enabling the vehicle to accelerate or decelerate in a short period of time by making a quick response to an acceleration or deceleration demand of the vehicle. The transient-state acceleration/deceleration mode is a longitudinal control mode for the purpose of enabling the vehicle to accelerate or decelerate in a short period of time by making a quick response to an acceleration or deceleration demand of the vehicle. For example, during automatic parking of the vehicle, longitudinal control of the vehicle can be performed according to the parking mode, so that the vehicle can be parked into a parking space accurately; and during control of the vehicle to travel on highways, longitudinal control of the vehicle can be performed according to the cruise control mode, so that the vehicle speed is maintained at the target speed.

In step S102, planned driving trajectory information of the vehicle within a current control cycle is obtained.

When the vehicle is controlled for autonomous driving, driving trajectory information of the vehicle is first planned (i.e., the planned driving trajectory information is obtained), and then the vehicle is controlled for autonomous driving based on the planned driving trajectory information.

The planned driving trajectory information may include a plurality of target points arranged in chronological order, each of the target points including at least target values of parameters such as time information, a vehicle position, a vehicle speed, a vehicle acceleration, and a heading angle, that is, each of the target points including at least a target position, a target speed, and a target acceleration of the vehicle at a moment corresponding to the target point. It should be noted that the method for planning the driving trajectory information is not specifically limited in the embodiments of the disclosure, as long as the planned driving trajectory information can be obtained.

In step S103, establishment conditions for the parking mode, the cruise control mode, the steady-state acceleration/deceleration mode, and the transient-state acceleration/deceleration mode are sequentially evaluated based on the planned driving trajectory information, to determine one intelligent driving control mode as an initial control mode for the current control cycle.

In different driving scenarios, a vehicle may have different target positions, target speeds, and target accelerations. Accordingly, a driving scenario of the vehicle can be analyzed based on the planned driving trajectory information of the vehicle, and then a matching intelligent driving control mode can be selected as the initial control mode according to the driving scenario.

In this embodiment of the disclosure, different establishment conditions can be set for different intelligent driving control modes, and then the planned driving trajectory information can be analyzed to check whether the planned driving trajectory information satisfies the set establishment conditions. If the planned driving trajectory information satisfies an establishment condition for a certain intelligent driving control mode, it indicates that this intelligent driving control mode matches the current driving scenario of the vehicle. For example, if the planned driving trajectory information satisfies the establishment condition for the parking mode, it indicates that the current driving scenario of the vehicle is a parking-related scenario, such as a parking scenario.

In this embodiment of the disclosure, a different priority can be set for each intelligent driving control mode, and the establishment conditions can be sequentially evaluated in order of priority from the highest to the lowest. Upon determining that an establishment condition for a certain intelligent driving control mode is satisfied, this intelligent driving control mode is directly used as the initial control mode, and the remaining intelligent driving control modes are not evaluated. The parking mode, the cruise control mode, the steady-state acceleration/deceleration mode, and the transient-state acceleration/deceleration mode are prioritized in decreasing order.

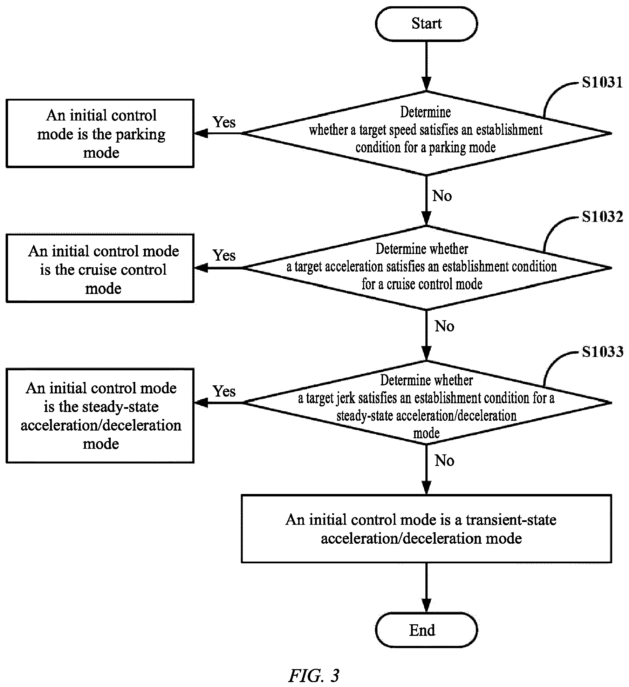

Referring to FIG. 3, in a possible implementation, one intelligent driving control mode can be determined, as an initial control mode, from a parking mode, a cruise control mode, a steady-state acceleration/deceleration mode, and a transient-state acceleration/deceleration mode through steps S 1031 to S 1033 below.

In step S 1031, it is determined whether a target speed satisfies an establishment condition for the parking mode; if the target speed satisfies the establishment condition for the parking mode, the parking mode is determined as the initial control mode; or if the target speed does not satisfy the establishment condition for the parking mode, the process proceeds to step S1032.

In parking-related driving scenarios, a vehicle usually has a low speed. Therefore, it can be determined, based on the magnitude of the target speed, whether the vehicle is in a parking-related driving scenario, that is, determining whether the establishment condition for the parking mode is satisfied.

In step S1032, it is determined whether a target acceleration satisfies an establishment condition for the cruise control mode; if the target acceleration satisfies the establishment condition for the cruise control mode, the cruise control mode is determined as the initial control mode; or if the target acceleration does not satisfy the establishment condition for the cruise control mode, the process proceeds to step S1033.

In cruise-control driving scenarios, a vehicle usually has a small acceleration because the vehicle speed needs to be maintained at the target speed. Therefore, it can be determined, based on the magnitude of the target acceleration, whether the vehicle is in a cruise-control driving scenario, that is, determining whether the establishment condition for the cruise control mode is satisfied.

In step S1033, it is determined whether a target jerk determined from the target acceleration satisfies an establishment condition for the steady-state acceleration/deceleration mode; if the target jerk satisfies the establishment condition for the steady-state acceleration/deceleration mode, the steady-state acceleration/deceleration mode is determined as the initial control mode; or if the target jerk does not satisfy the establishment condition for the steady-state acceleration/deceleration mode, the transient-state acceleration/deceleration mode is determined as the initial control mode.

The target jerk is a variation in the target acceleration per unit time. A large target jerk indicates a large variation in the target acceleration per unit time, that is to say, the vehicle is accelerating or decelerating rapidly; and a large target jerk indicates a small variation in the target acceleration per unit time, that is to say, the vehicle is accelerating or decelerating steadily. Therefore, it can be determined, based on the magnitude of the target jerk, whether the vehicle is in a rapid-acceleration/deceleration driving scenario or in a steady-acceleration/deceleration driving scenario, that is, determining whether the establishment condition for the transient-state acceleration/deceleration mode is satisfied or the establishment condition for the steady-state acceleration/deceleration mode is satisfied.

It should be noted that those skilled in the art can flexibly set the specific value of the unit time according to actual needs. For example, the unit time may be 1s.

Based on the method described in steps S1031 to S1033 above, it can be accurately determined, based on the target speed, the target acceleration, and the target jerk in the planned driving trajectory information, whether the establishment conditions for the parking mode, the cruise control mode, the steady-state acceleration/deceleration mode, and the transient-state acceleration/deceleration mode are satisfied, to accurately determine the initial control mode for the current control cycle.

The method for determining whether the target speed, the target acceleration, and the target jerk satisfy the establishment conditions for the parking mode, the cruise control mode, and the steady-state acceleration/deceleration mode, respectively, in steps S1031 to S1033 above is explained below. In this embodiment of the disclosure, the methods for determining, based on the target speed, the target acceleration, and the target jerk, whether the establishment conditions for the respective intelligent driving control modes are satisfied are similar. Therefore, for the sake of simplicity of description, the target speed, the target acceleration, and the target jerk within the current control cycle are collectively described as a "driving trajectory parameter $p_{cur}$". The methods for evaluating the above establishment conditions are explained based on this "driving trajectory parameter $p_{cur}$".

To be specific, in this embodiment of the disclosure, it can be determined whether the driving trajectory parameter $p_{cur}$ satisfies an establishment condition for its corresponding intelligent driving control mode through steps 11 and 12 below. It should be noted that when the driving trajectory parameter $p_{cur}$ is the target speed, the target acceleration, and the target jerk, respectively, the initial control mode corresponding to the driving trajectory parameter $p_{cur}$ is the parking mode, the cruise control mode, and the steady-state acceleration/deceleration mode, respectively.

In step 11: a lower limit $e_{th1}$ and an upper limit $e_{th2}$ of a parameter threshold are respectively determined based on a type of the driving trajectory parameter $p_{cur}$.

The type of the driving trajectory parameter $p_{cur}$ includes a speed, an acceleration, and a jerk of the vehicle. Those skilled in the art can flexibly set lower limits $e_{th1}$ and upper limits $e_{th2}$ of parameter thresholds corresponding to different types of driving trajectory parameter $p_{cur}$ according to actual needs. For example, in some preferred implementations, the lower limit $e_{th1}$ and the upper limit $e_{th2}$ corresponding to the speed may be 0.2 *kph* and 0.5 *kph,* respectively; the lower limit $e_{th1}$ and the upper limit $e_{th2}$ corresponding to the acceleration may be 0.1 *mps²* and 0.2 *mps²,* respectively; and the lower limit $e_{th1}$ and the upper limit $e_{th2}$ corresponding to the jerk may be 0.1 *mps³* and 0.2 *mps³,* respectively.

In step 12: the driving trajectory parameter $p_{cur}$ is compared with the lower limit $e_{th1}$ and the upper limit $e_{th2}$ of the parameter threshold.

If $p_{cur} < e_{th1}$ and this lasts for a preset duration, it is determined that the driving trajectory parameter $p_{cur}$ satisfies the establishment condition for its corresponding intelligent driving control mode, where the specific value of the preset duration can also be determined based on the type of the driving trajectory parameter $p_{cur}$, and different types of driving trajectory parameter $p_{cur}$ may correspond to the same or different preset durations. Those skilled in the art can flexibly set the specific value of the preset duration according to actual needs. For example, in some preferred implementations, the preset durations corresponding to the speed, the acceleration, and the jerk of the vehicle may all be 0.2s.

If $e_{th1} \leq p_{cur} \leq e_{th2}$ and an initial control mode for a previous control cycle is also the initial control mode corresponding to the driving trajectory parameter $p_{cur}$, it is determined that the driving trajectory parameter $p_{cur}$ satisfies the establishment condition for its corresponding intelligent driving control mode. For example, when the driving trajectory parameter $p_{cur}$ is the target speed, if the target speed satisfies the condition $e_{th1} \leq p_{cur} \leq e_{th2}$ and the initial control mode for the previous control cycle is also the parking mode, it is determined that the current control cycle also satisfies the establishment condition for the parking mode, and the parking mode continues to be used as the initial control mode.

If $p_{cur} > e_{th2}$, it is determined that the driving trajectory parameter $p_{cur}$ does not satisfy the establishment condition for its corresponding intelligent driving control mode. If the target jerk does not satisfy the establishment condition for the steady-state acceleration/deceleration mode, it indicates that the target jerk satisfies the establishment condition for the transient-state acceleration/deceleration mode.

Based on the method described in steps 11 and 12 above, the establishment conditions for the parking mode, the cruise control mode, and the steady-state acceleration/deceleration mode can be accurately evaluated based on the magnitude of the target speed, the target acceleration, and the target jerk, such that the accuracy of the initial control mode is further improved.

In step S104, longitudinal control of the vehicle is performed within the current control cycle according to the initial control mode and based on the planned driving trajectory information.

In this embodiment of the disclosure, the longitudinal control of the vehicle can be performed according to the initial control mode and based on the planned driving trajectory information and actual trajectory information of the vehicle (including at least an actual position, an actual speed, and an actual acceleration of the vehicle), such that the actual position, the actual speed, and the actual acceleration of the vehicle reach a target position, a target speed, and a target acceleration determined from the planned driving trajectory information, respectively.

Based on the method described in steps S101 to S104 above, an initial control mode for each control cycle can be accurately determined based on planned driving trajectory information within each control cycle, and the longitudinal control of the vehicle can be performed according to the initial control mode. In this way, different intelligent driving control modes can be switched adaptively and smoothly based on planned driving trajectory information when a vehicle is controlled for point-to-point autonomous driving with integrated traveling and parking, even if various autonomous driving tasks such as high-speed cruising, vehicle following in urban areas, and automatic parking are covered. Therefore, the reliability and stability of longitudinal control of the vehicle can be significantly improved, thus improving the comfort and safety during traveling of the vehicle.

The method for setting an intelligent driving control mode for longitudinal control of a vehicle in step S 101 above is explained below.

To be specific, the initial strategy for the intelligent driving control mode is first set, and is then adjusted using different adjustment methods, to obtain the parking mode, the cruise control mode, the steady-state acceleration/deceleration mode, and the transient-state acceleration/deceleration mode. The method for setting the initial strategy and the method for adjusting the initial strategy to obtain each intelligent driving control mode are respectively explained below.

(I) Method for setting the initial strategy

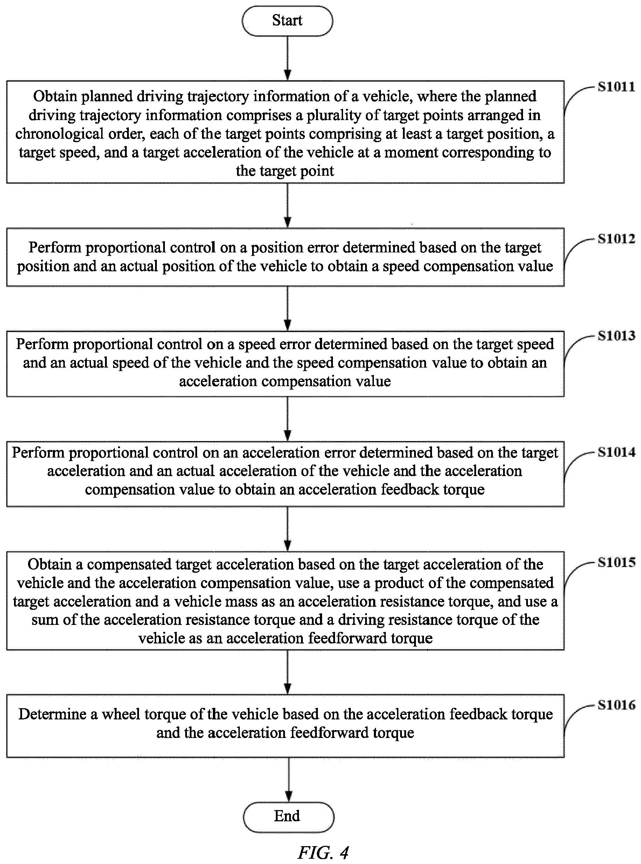

Referring first to FIG. 1, FIG. 1 exemplarily shows a control principle for longitudinal control of a vehicle. In this embodiment of the disclosure, the initial strategy is set based on the control principle shown in FIG. 1. Therefore, the initial strategy in this embodiment of the disclosure also includes a position control phase, a speed control phase, and an acceleration control phase, and a main difference from the control principle shown in FIG. 1 lies in the acceleration control phase. The method for setting the initial strategy for the intelligent driving control mode in this embodiment of the disclosure is explained below in conjunction with FIG 4. As shown in FIG. 4, in this embodiment of the disclosure, the initial strategy for the intelligent driving control mode can be set through steps S1011 to S 1016 below.

In step S1011, planned driving trajectory information of a vehicle is obtained, where the planned driving trajectory information includes a plurality of target points arranged in chronological order, each of the target points including at least a target position, a target speed, and a target acceleration of the vehicle at a moment corresponding to the target point.

In step S 1012, proportional control is performed on a position error determined based on the target position and an actual position of the vehicle to obtain a speed compensation value.

In step S 1013, proportional control is performed on a speed error determined based on the target speed and an actual speed of the vehicle and the speed compensation value to obtain an acceleration compensation value.

In step S1014, proportional control is performed on an acceleration error determined based on the target acceleration and an actual acceleration of the vehicle and the acceleration compensation value to obtain an acceleration feedback torque.

The acceleration compensation value is determined based on the speed error, and the speed error is determined based on the position error. Therefore, the above acceleration feedback torque is determined based on all of the position error, the speed error, and the acceleration error. Using this acceleration feedback torque to determine the wheel torque of the vehicle enables the actual position, the actual speed, and the actual acceleration of the vehicle to be close to the target position, the target speed, and the target acceleration, respectively.

In step S1015, a compensated target acceleration is obtained based on the target acceleration of the vehicle and the acceleration compensation value, a product of the compensated target acceleration and a vehicle mass is used as an acceleration resistance torque, and a sum of the acceleration resistance torque and a driving resistance torque of the vehicle is used as an acceleration feedforward torque.

A driving resistance of the vehicle may include a slop resistance, an air resistance, a rolling resistance, etc. The driving resistance torque of the vehicle is a torque required to overcome the above driving resistance of the vehicle. The driving resistance torque of the vehicle may include a slop resistance torque, an air resistance torque, and a rolling resistance torque. The acceleration resistance torque is a torque required to overcome the resistance caused by the vehicle mass when the vehicle is traveling at the compensated target acceleration. Using the above acceleration resistance torque and the driving resistance torque of the vehicle to determine the wheel torque of the vehicle allows the vehicle to overcome the above driving resistance and the resistance caused by the vehicle mass, enabling the actual position, the actual speed, and the actual acceleration of the vehicle to be closer to the target position, the target speed, and the target acceleration.

In step S1016, a wheel torque of the vehicle is determined based on the acceleration feedback torque and the acceleration feedforward torque. Specifically, a sum of the acceleration feedback torque and the acceleration feedforward torque may be used as the wheel torque of the vehicle, or a product of this sum and a preset gain value may be used as the wheel torque of the vehicle.

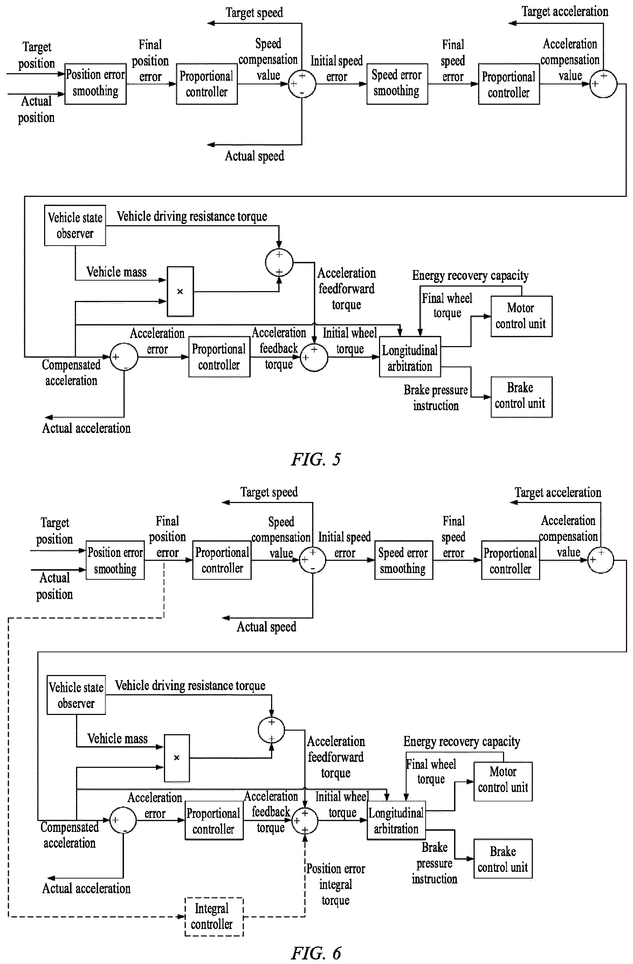

Referring to FIG. 5, FIG. 5 exemplarily shows a control principle for the above initial strategy. As shown in FIG. 5, the initial strategy includes a position control phase, a speed control phase, and an acceleration control phase. Specifically, in the position control phase, a position error can be obtained based on a target position and an actual position, this position error can be smoothed to obtain a final position error, and the final position error can be input into a proportional controller to obtain a speed compensation value. In the speed control phase, an actual speed can be subtracted from a sum of a target speed and the speed compensation value to obtain an initial speed error, the initial speed error can be smoothed to obtain a final speed error, and the final speed error can be input into a proportional controller to obtain an acceleration compensation value. In the acceleration control phase, a compensated acceleration can be obtained based on a sum of a target acceleration and the acceleration compensation value, an actual acceleration can be subtracted from the compensated acceleration to obtain an acceleration error, and the acceleration error can be input into a proportional controller to obtain an acceleration feedback torque; in addition, the compensated acceleration can be multiplied by a vehicle mass to obtain an acceleration resistance torque, and the acceleration resistance torque can be added to a driving resistance torque of a vehicle provided by a vehicle state sensor to obtain an acceleration feedforward torque; and finally, the acceleration feedforward torque can be added to the acceleration feedback torque to obtain an initial wheel torque.

Based on the method described in steps S1014 to S1016 above, both the acceleration feedback torque and the acceleration feedforward torque can be obtained in the acceleration control phase, and the wheel torque of the vehicle can be determined based on the two torques. Therefore, the accuracy of longitudinal control of the vehicle can be improved. In addition, in this embodiment of the disclosure, the position control phase and the speed control phase are both controlled by means of proportional control, by which the position error and the speed error can be quickly tracked.

For vehicles that use electrical energy as a power source, an energy recovery system is usually disposed on the vehicle. When brake control of the vehicle is required, an energy recovery torque provided by the energy recovery system is first used for brake control of the vehicle. When the energy recovery torque provided by the energy recovery system cannot meet a demand of brake control, a mechanical brake torque on the vehicle is then used for brake control of the vehicle. In this regard, in a preferred implementation of this embodiment of the disclosure, the initial strategy for the intelligent driving control mode may include a step of controlling brake of the vehicle, in addition to steps S 1011 to S 1016 above. This step specifically includes: upon detecting that an energy recovery torque provided by a motor on the vehicle cannot meet a demand of the wheel torque of the vehicle, a brake pressure instruction can be generated based on the energy recovery torque, the wheel torque, and a compensated target acceleration (the compensated target acceleration obtained in step S1015 above), and the brake pressure instruction can be sent to a brake control unit (BCU) of the vehicle, such that the brake control unit is able to control the vehicle to decelerate according to the brake pressure instruction, that is to say, the brake control unit performs mechanical brake. That the energy recovery torque provided by the motor cannot meet the demand of the wheel torque of the vehicle means that the energy recovery torque is less than the wheel torque of the vehicle. In this case, the mechanical brake is required to meet the demand of the wheel torque. In this regard, the magnitude of the mechanical brake torque can be determined based on a difference between the energy recovery torque and the wheel torque, and then a brake pressure instruction is generated based on the magnitude of the mechanical brake torque and the compensated target acceleration, such that the brake control unit can generate a corresponding magnitude of mechanical brake torque under the control of the instruction, to meet the demand of the wheel torque.

As shown in FIG. 5, upon obtaining the initial wheel torque through the acceleration control phase, longitudinal arbitration can be performed based on an energy recovery torque provided by a motor control unit; and if the energy recovery torque is less than the initial wheel torque, a brake pressure instruction can be generated based on the energy recovery torque, the initial wheel torque, and the compensated target acceleration, and this brake pressure instruction is sent to the brake control unit, such that the brake control unit controls the vehicle to decelerate. It should be noted that when the energy recovery torque is greater than or equal to the initial wheel torque, the magnitude of a final wheel torque input into the motor control unit is the same as the magnitude of this initial wheel torque; or when the energy recovery torque is less than the initial wheel torque, the final wheel torque input into the motor control unit is the energy recovery torque that the motor control unit can provide. In this embodiment of the disclosure, a conventional brake pressure instruction generation method in the field of vehicle technologies can be used to generate the brake pressure instruction based on the magnitude of the mechanical brake torque and the compensated target acceleration. This is not specifically limited in the embodiments of the disclosure.

(II) Method for adjusting the initial strategy to obtain each intelligent driving control mode

The transient-state acceleration/deceleration mode requires a quick response to an acceleration/deceleration demand of the vehicle. Therefore, in order to meet this demand, the above initial strategy for the intelligent driving control mode can be directly used as the control strategy for the transient-state acceleration/deceleration mode, and no integral control is performed on the position error, the speed error and the acceleration error. Instead, the parking mode, the cruise control mode, and the steady-state acceleration/deceleration mode mainly involve the addition of integral control to the acceleration control phase of the above initial strategy, to obtain a final control strategy. The control strategies for the parking mode, the cruise control mode, and the steady-state acceleration/deceleration mode are respectively explained below.

1. Parking mode

The control strategy for the parking mode includes the foregoing steps S1011 to S1015. The above step S 1016 is replaced by: performing integral control on the position error to obtain a position error integral torque, and determining the wheel torque of the vehicle based on the acceleration feedback torque, the acceleration feedforward torque, and the position error integral torque. Specifically, a sum of the acceleration feedback torque, the acceleration feedforward torque, and the position error integral torque may be used as the wheel torque of the vehicle, or a product of this sum and a preset gain value may be used as the wheel torque of the vehicle. Integral control of the position error allows for more precise position control of the vehicle, enabling the vehicle to better perform parking-related tasks.

Referring to FIG. 6, FIG. 6 exemplarily shows a control strategy for the parking mode. Compared with the initial strategy shown in FIG. 5, the control strategy for the parking mode as shown in FIG. 6 has an integral controller (dashed box in FIG. 6) added. The final position error will be input into the proportional controller as well as to this integral controller for integral control to obtain the position error integral torque, and finally, the initial wheel torque of the vehicle is determined based on the sum of all of the acceleration feedback torque, the acceleration feedforward torque, and the position error integral torque.

2. Cruise control mode

The control strategy for the cruise control mode includes the foregoing steps S1011 to S1015. The above step S 1016 is replaced by: performing integral control on the speed error to obtain a speed error integral torque, and determining the wheel torque of the vehicle based on the acceleration feedback torque, the acceleration feedforward torque, and the speed error integral torque. Specifically, a sum of the acceleration feedback torque, the acceleration feedforward torque, and the speed error integral torque may be used as the wheel torque of the vehicle, or a product of this sum and a preset gain value may be used as the wheel torque of the vehicle. Integral control of the speed error allows for more precise speed control of the vehicle, enabling the actual speed of the vehicle to be steadily maintained at the target speed.

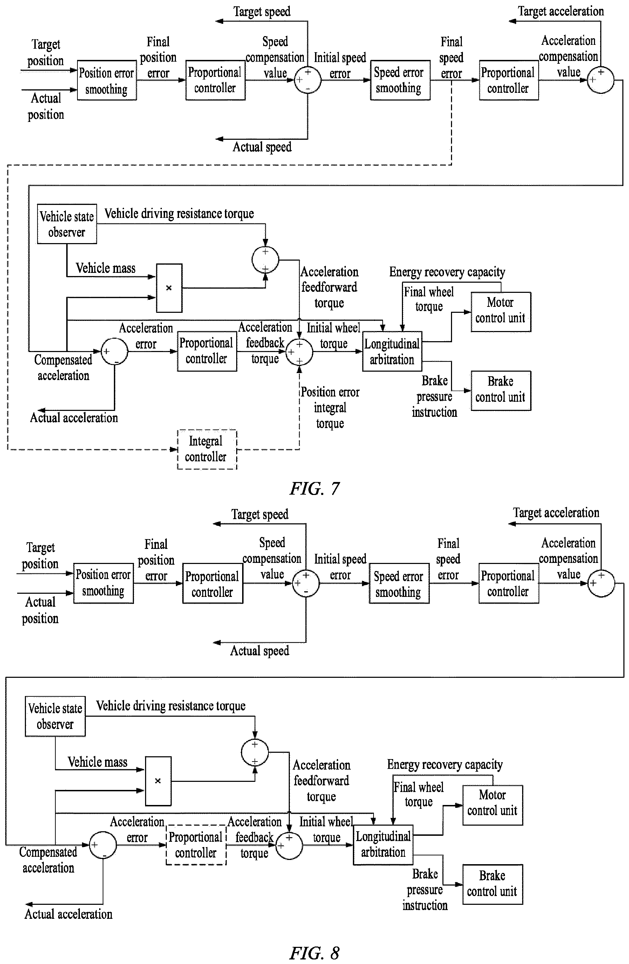

Referring to FIG. 7, FIG. 7 exemplarily shows a control strategy for the cruise control mode. Compared with the initial strategy shown in FIG. 5, the control strategy for the cruise control mode as shown in FIG. 7 has an integral controller (dashed box in FIG. 7) also added. The final speed error will be input into the proportional controller as well as to this integral controller for integral control to obtain the speed error integral torque, and finally, the initial wheel torque of the vehicle is determined based on the sum of all of the acceleration feedback torque, the acceleration feedforward torque, and the speed error integral torque.

3. Steady-state acceleration/deceleration mode

The control strategy for the steady-state acceleration/deceleration mode includes the foregoing steps S1011 to S1015. The above step S 1016 is replaced by: performing integral control on the acceleration error to obtain an acceleration error integral torque, and determining the wheel torque of the vehicle based on the acceleration feedback torque, the acceleration feedforward torque, and the acceleration error integral torque. Specifically, a sum of the acceleration feedback torque, the acceleration feedforward torque, and the acceleration error integral torque may be used as the wheel torque of the vehicle, or a product of this sum and a preset gain value may be used as the wheel torque of the vehicle. Integral control of the acceleration error allows for more precise acceleration/deceleration control of the vehicle.

Referring to FIG. 8, FIG. 8 exemplarily shows a control strategy for the steady-state acceleration/deceleration mode. Compared with the initial strategy shown in FIG. 5, the control strategy for the steady-state acceleration/deceleration mode as shown in FIG. 8 has the proportional controller in the acceleration control phase replaced with a proportional-integral controller (dashed box in FIG. 8). The acceleration error will be input into this proportional-integral controller for proportional-integral control to obtain a new acceleration feedback torque, and finally, the initial wheel torque of the vehicle is determined based on a sum of this new acceleration feedback torque and the speed error integral torque. It should be noted that performing integral control on the acceleration error may obtain an acceleration error integral torque, and the new acceleration feedback torque described above is a sum of the original acceleration feedback torque and this acceleration error integral torque.

The above is the description of the first embodiment of the method for longitudinal control of a vehicle.

II. Second embodiment of the method for longitudinal control of a vehicle

In the second method embodiment, in addition to setting the intelligent driving control mode, it is also possible to set a longitudinal override mode for longitudinal control of the vehicle, where the longitudinal override mode has a higher priority than the intelligent driving control mode. A control strategy for the longitudinal override mode is the same as the initial strategy determined through steps S 1011 to S 1016 in the preceding method embodiment.

Since the priority of the longitudinal override mode is higher than that of the intelligent driving control mode, it is necessary to determine whether an establishment condition for the longitudinal override mode is satisfied before determining the initial control mode for the current control cycle. If the establishment condition for the longitudinal override mode is satisfied, the longitudinal override mode is used as the initial control mode. If the establishment condition for the longitudinal override mode is not satisfied, the establishment conditions for the intelligent driving control mode (the parking mode, the cruise control mode, the steady-state acceleration/deceleration mode, and the transient-state acceleration/deceleration mode) are then sequentially evaluated to determine the initial control mode.

The establishment condition for the longitudinal override mode may include that torque request information of an accelerator pedal of the vehicle is greater than torque request information determined from the planned driving trajectory information or that a torque intervention instruction output by a chassis stability control system of the vehicle is received. The torque request information may include acceleration information. The acceleration information in the torque request information of the accelerator pedal of the vehicle is an acceleration generated after a driver depresses the accelerator pedal, and the torque request information determined from the planned driving trajectory information is the target acceleration in the planned driving trajectory information. The torque intervention instruction may include information such as the speed or acceleration of the vehicle. After the longitudinal override mode is used as the initial control mode for the current control cycle, longitudinal control of the vehicle can be performed within the current control cycle according to the initial control mode and based on the torque request information of the accelerator pedal of the vehicle or the torque intervention instruction.

If the torque request information of the accelerator pedal of the vehicle is greater than the torque request information determined from the planned driving trajectory information, it indicates that the planned driving trajectory information cannot meet a driving demand of the driver of the vehicle, and thus there is a need to give priority to the driving demand of the driver of the vehicle. To be specific, the longitudinal override mode is used and longitudinal control of the vehicle is performed based on the torque request information of the accelerator pedal of the vehicle. For example, if the torque request information of the accelerator pedal of the vehicle is parsed to obtain an acceleration 3 $mps^2$ and the target acceleration in the planned driving trajectory information is 1 $mps^2$, due to 3 $mps^2$ > 1 $mps^2$, then the mode will be switched to the longitudinal override mode for longitudinal control of the vehicle. It should be noted that after switching to the longitudinal override mode, the target acceleration input in the acceleration control phase is no longer 1 $mps^2$ determined from the planned driving trajectory information, but 3 $mps^2$ obtained by parsing the torque request information of the accelerator pedal of the vehicle.

The chassis stability control system of the vehicle is used to maintain the stability of a vehicle chassis. The system can output the torque intervention instruction in the case of a poor stability of the vehicle chassis, to control the vehicle to travel according to the torque intervention instruction. Therefore, if the torque intervention instruction output by the chassis stability control system is received, it indicates that the vehicle chassis has a poor stability at present. In order to ensure the driving safety of the vehicle, the longitudinal override mode is also required and longitudinal control of the vehicle is performed based on the speed or acceleration in this torque intervention instruction. It should be noted that the chassis stability control system is a conventional chassis control system on the vehicle. The structure and control principle of the chassis stability control system are not specifically limited in the embodiments of the disclosure, as long as the torque intervention instruction output by the chassis stability control system can be received.

Based on the above method, not only can the driving demand of the driver of the vehicle met, but the stability of the vehicle chassis can also be ensured, thereby improving the driving safety of the vehicle.

The above is the description of the second embodiment of the method for longitudinal control of a vehicle.

III. Third embodiment of the method for longitudinal control of a vehicle

In the third method embodiment, when the current control cycle has a different initial control mode from the previous control cycle, a correction determination may also be made as to the initial control mode for the current control cycle and corrections may be selectively made based on a determination result, to avoid the problem of the safety and comfort of the vehicle being reduced due to a large variation in the wheel torque of the vehicle as a result of a change in the type of control modes for the preceding and following control cycles.

The method for correcting the initial control mode when switching is performed between different intelligent driving control modes, and the method for correcting the initial control mode when switching is performed from the longitudinal override mode to the intelligent driving control mode or the vehicle enters the intelligent driving control mode for the first time after being started are respectively explained below.

(I) Method for correcting the initial control mode for the current control cycle when switching is performed between different intelligent driving control modes

When the initial control mode for the current control cycle and an initial control mode for a previous control cycle are both intelligent driving control modes and the initial control mode for the current control cycle is the parking mode or the cruise control mode or the steady-state acceleration/deceleration mode, it can first be determined whether the initial control mode for the current control cycle is the same as the initial control mode for the previous control cycle.

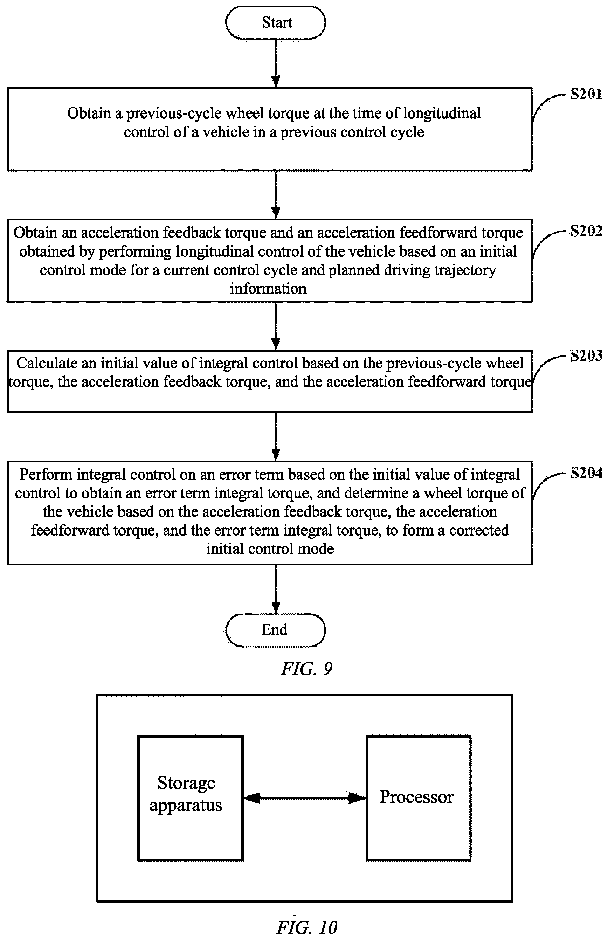

If the initial control mode for the current control cycle is the same as the initial control mode for the previous control cycle, no correction is made. If the initial control mode for the current control cycle is not the same as the initial control mode for the previous control cycle, the initial control mode for the current control cycle can be corrected through steps S201 to 5204 shown in FIG. 9.

In step S201, a previous-cycle wheel torque at the time of longitudinal control of a vehicle in the previous control cycle is obtained.

In step S202, an acceleration feedback torque and an acceleration feedforward torque obtained by performing longitudinal control of the vehicle based on the initial control mode and the planned driving trajectory information for the current control cycle are obtained.

In step S203, an initial value of integral control is calculated based on the previous-cycle wheel torque, the acceleration feedback torque, and the acceleration feedforward torque by using the following formula (1):

$$I = Tqpre - Tqfb - Tqff \quad (1)$$

In formula (1), parameters are respectively defined as follows:

$I$ represents the initial value of integral control, and $Tqpre$, $Tqfb$, and $Tqff$ represent the previous-cycle wheel torque, the acceleration feedback torque, and the acceleration feedforward torque, respectively.

In step S204, integral control is performed on an error term based on the initial value of integral control to obtain an error term integral torque, and a wheel torque of the vehicle is determined based on the acceleration feedback torque, the acceleration feedforward torque, and the error term integral torque, to form a corrected initial control mode.

As shown in FIGS. 6, 7, and 8, when the initial control mode is the parking mode, the cruise control mode, and the steady-state acceleration/deceleration mode, respectively, the error term is the position error, the speed error, and the acceleration error, respectively, and the error term integral torque is the position error integral torque, the speed error integral torque, and the acceleration error integral torque, respectively.

Based on the method described in steps S201 to 5204 above, a transition between different intelligent driving control modes can be implemented by means of setting the initial value of integral control, to avoid the problem of the safety and comfort of the vehicle being reduced due to a large variation in the wheel torque of the vehicle as a result of a change in the type of the intelligent driving control mode.

(II) Method for correcting the initial control mode for the current control cycle when switching is performed from the longitudinal override mode to the intelligent driving control mode or the vehicle enters the intelligent driving control mode for the first time after being started

In this embodiment of the disclosure, the initial control mode can be corrected by means of torque transition control in the current control cycle, and the method for correcting the initial control mode when torque transition control is not performed in the current control cycle is not the same as the method for correcting the initial control mode when torque transition control is performed in the current control cycle. The correction methods for the two cases are respectively explained below.

1. Perform no torque transition control in the current control cycle

In this embodiment of the disclosure, an entry condition for torque transition control can be set. Then it can be determined whether the entry condition for torque transition control is satisfied in the current control cycle; if the entry condition for torque transition control is satisfied, a new round of torque transition control is initiated and the initial control mode for the current control cycle is corrected to a transition control mode; or if the entry condition for torque transition control is not satisfied, a new round of torque transition control is not initiated and no correction is made to the initial control mode for the current control cycle.

The entry condition and the transition control mode are respectively explained below.

(1) Entry condition

In this embodiment of the disclosure, three different entry conditions can be set, and as long as any one of the entry conditions is satisfied, it can be determined that the entry condition for torque transition control is satisfied.

Entry condition 1: The initial control modes for the current control cycle and the previous control cycle are the intelligent driving control mode and the longitudinal override mode, respectively, that is, switching from the longitudinal override mode to the intelligent driving control mode.

Entry condition 2: The current control cycle is the first control cycle for longitudinal control of the vehicle, that is, performing longitudinal control of the vehicle for the first time after the vehicle is started.

Entry condition 3: The initial control mode for the current control cycle is the transient-state acceleration/deceleration mode, and the initial control mode for the previous control cycle is the parking mode or the cruise control mode or the steady-state acceleration/deceleration mode, that is, switching from the transient-state acceleration/deceleration mode to any of the parking mode, the cruise control mode, and the steady-state acceleration/deceleration mode.

(2) Transition control mode

A control strategy for the transition control mode is as follows:
A current-cycle wheel torque obtained based on the initial control mode and the planned driving trajectory information for the current control cycle is corrected based on the previous-cycle wheel torque of the vehicle obtained in the previous control cycle and a preset change slope, to narrow a gap between the previous-cycle wheel torque and the current-cycle wheel torque, and thereby perform longitudinal control of the vehicle based on the corrected current-cycle wheel torque. If the initial control mode for the current control cycle contains an error term, the initial control mode is controlled to stop integral control of the error term, and when the initial control mode is the parking mode, the cruise control mode, and the steady-state acceleration/deceleration mode, respectively, the error term is the position error, the speed error, and the acceleration error, respectively.

In a preferred implementation of this embodiment of the disclosure, the current-cycle wheel torque obtained based on the initial control mode and the planned driving trajectory information for the current control cycle can be corrected based on the previous-cycle wheel torque and the preset change slope by using the following formula (2).

$$T_{final} = T_{pre} + \min \left( limited_{rate} \times ts, \max \left( -1 \times limited_{rate} \times ts, T_{cur} - T_{pre} \right) \right) \quad (2)$$

In formula (2), parameters are respectively defined as follows:
$T_{final}$ represents a torque obtained after correction of the current-cycle wheel torque, $T_{pre}$ represents the previous-cycle wheel torque, $limited_{rate}$ represents the preset change slope, $ts$ represents a sampling time, min represents a minimum function, max represents a maximum function, and $T_{cur}$ represents the current-cycle wheel torque. Those skilled in the art can flexibly set the specific value of the preset change slope according to actual needs. This is not specifically limited in the embodiments of the disclosure.

2. Perform torque transition control in the current control cycle

In this embodiment of the disclosure, in addition to setting the foregoing entry condition, it is also possible to set an exit condition for torque transition control. Then, it is determined whether the entry condition for torque transition control is satisfied in the current control cycle and whether the exit condition for torque transition control is satisfied in the current control cycle, respectively. Finally, the initial control mode is corrected based on different determination results by using different correction methods.

The exit condition includes that an absolute value of a deviation between wheel torques before and after corrections corresponding to the previous control cycle of the current control cycle is less than a preset deviation threshold, and an absolute value of a deviation between wheel torques before and after corrections corresponding to the second control cycle counted down from the current control cycle is greater than or equal to a preset deviation threshold.

Still referring to formula (2), $T_{cur}$ may represent the wheel torque before the correction, and $T_{final}$ may represent the wheel torque after the correction. Assuming that the current control cycle is the fifth control cycle, "an absolute value of a deviation between wheel torques before and after corrections corresponding to the previous control cycle of the current control cycle is less than a preset deviation threshold" means that an absolute value of a deviation between $T_{cur}$ and $T_{final}$ corresponding to the fourth control cycle is less than a preset deviation threshold, and "an absolute value of a deviation between wheel torques before and after corrections corresponding to the second control cycle counted down from the current control cycle is greater than or equal to a preset deviation threshold" means that an absolute value of a deviation between $T_{cur}$ and $T_{final}$ corresponding to the third control cycle is greater than or equal to a preset deviation threshold. Those skilled in the art can flexibly set the specific value of the deviation threshold according to actual needs. This is not specifically limited in the embodiments of the disclosure.

The method for correcting the initial control mode based on different determination results by using different correction methods is explained below.

If both the entry condition and the exit condition are satisfied, no correction is made to the initial control mode for the current control cycle, and this round of torque transition control is ended. Specifically, although the initial control modes for the current control cycle and the previous control cycle are different from each other, since a wheel torque for at least one control cycle before the current control cycle has already satisfied the exit condition, this round of torque transition control can be ended, and no correction is made to the initial control mode for the current control cycle.

If the entry condition is satisfied and the exit condition is not satisfied, the initial control mode for the current control cycle is corrected to the transition control mode. Specifically, since a wheel torque for at least one control cycle before the current control cycle does not yet satisfy the exit condition, this round of torque transition control cannot be ended, and corrections to the initial control mode for the current control cycle are required.

If the entry condition is not satisfied and the exit condition is satisfied, no correction is made to the initial control mode for the current control cycle, and this round of torque transition control is ended.

If neither the entry condition nor the exit condition is satisfied, the initial control mode for the current control cycle is corrected to a control mode actually used in the previous control cycle, where the control mode actually used is the initial control mode or the transition control mode. Specifically, the entry condition is not satisfied, which indicates that there is no remarkable difference between the wheel torques for the current control cycle and the previous control cycle. However, since the exit condition is also not satisfied, it is necessary to continue longitudinal control of the vehicle using the control mode actually used in the previous control cycle, in order to ensure a high level of comfort of the vehicle.

With the above method for torque transition control, the wheel torque can be corrected gradually to avoid the problem of the safety and comfort of the vehicle being reduced due to a large variation in the wheel torque of the vehicle as a result of a change in the type of the intelligent driving control mode.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a computer device.

Referring to FIG. 10, FIG. 10 is a schematic diagram of a main structure of a computer device according to an embodiment of the disclosure. As shown in FIG. 10, the computer device in the embodiment of the disclosure mainly includes a storage apparatus and a processor. The storage apparatus may be configured to store a program for performing the method for longitudinal control of a vehicle in the above method embodiments, and the processor may be configured to execute a program in the storage apparatus. The program includes, but is not limited, to the program for performing the method for longitudinal control of a vehicle in the above method embodiments. For ease of description, only parts related to the embodiments of the disclosure are shown. For specific technical details that are not disclosed, reference may be made to the method part of the embodiments of the disclosure.

In the embodiments of the disclosure, the computer device may be a control device formed by various electronic devices. In some possible implementations, the computer device may include a plurality of storage apparatuses and a plurality of processors. In addition, the program for performing the method for longitudinal control of a vehicle in the above method embodiments may be divided into a plurality of subprograms, each subprogram may be separately loaded and run by the processors to perform different steps of the method for longitudinal control of a vehicle in the above method embodiments. Specifically, each subprogram may be stored separately in a different storage apparatus, and each processor may be configured to execute a program in one or more storage apparatuses to jointly implement the method for longitudinal control of a vehicle in the above method embodiments, that is to say, each processor separately performs different steps of the method for longitudinal control of a vehicle in the above method embodiments to jointly implement the method for longitudinal control of a vehicle in the above method embodiments.

The plurality of processors may be processors deployed on the same device. For example, the computer device may be a high-performance device composed of a plurality of processors, and the plurality of processors may be processors configured on the high-performance device. In addition, the plurality of processors may also be processors deployed on different devices. For example, the computer device may be a server cluster, and the plurality of processors may be processors on different servers in the server cluster.

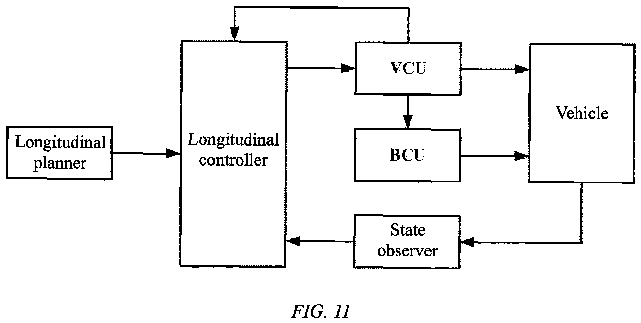

Referring to FIG. 11, FIG. 11 exemplarily shows a schematic diagram of a hardware environment of a computer device according to an embodiment of the disclosure. As shown in FIG. 11, in this embodiment of the disclosure, the computer device may include a plurality of processors, which can be respectively used as a longitudinal planner, a longitudinal controller, a state observer, a vehicle control unit (VCU), and a brake control unit (BCU). To be specific, the longitudinal planner can plan driving trajectory information of a vehicle, i.e., the planned driving trajectory information of the vehicle described in the foregoing method embodiments, based on information such as a driving environment of the vehicle and a destination entered by a driver. The longitudinal controller can obtain the planned driving trajectory information obtained by the longitudinal planner, and obtain a wheel torque, i.e., the initial wheel torque in FIGS. 5 to 8 in the foregoing method embodiments, based on the planned driving trajectory information. Furthermore, the longitudinal controller inputs this initial wheel torque and a compensated acceleration, i.e., the compensated acceleration in FIGS. 5 to 8 in the foregoing method embodiments, into the VCU. The VCU can perform longitudinal arbitration based on an energy recovery torque provided by a motor control unit. If the energy recovery torque cannot meet a demand of this initial wheel torque, a brake pressure instruction can be generated based on the energy recovery torque, the initial wheel torque, and a compensated target acceleration, and this brake pressure instruction is output to the BCU, such that the BCU can control the vehicle to decelerate according to this brake pressure instruction. The state observer can obtain the actual position, the actual speed and the actual acceleration of the vehicle, the vehicle mass, the driving resistance torque of the vehicle, etc.

Further, the disclosure further provides a computer-readable storage medium.

In an embodiment of the computer-readable storage medium according to the disclosure, the computer-readable storage medium may be configured to store a program for performing the method for longitudinal control of a vehicle in the above method embodiments, and the program may be loaded and run by a processor to implement the above method for longitudinal control of a vehicle. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In an embodiment of the vehicle according to the disclosure, the vehicle may include the computer device described in the above embodiment of the computer device. In this embodiment, the vehicle may be a self-driving vehicle, an unmanned vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the disclosure have been described with reference to an implementation shown in the accompanying drawings. However, it would have been readily understood by those skilled in the art that the scope of protection of the disclosure is obviously not limited to these specific implementations. Those skilled in the art may make equivalent changes or substitutions to the related technical features without departing from the principle of the disclosure, and all the technical solutions with such changes or substitutions shall fall within the scope of protection of the disclosure.

**Claims**

1. A method for longitudinal control of a vehicle, the method comprising:

setting an intelligent driving control mode for longitudinal control of the vehicle, wherein the intelligent driving control mode comprises a parking mode, a cruise control mode, a steady-state acceleration/deceleration mode, and a transient-state acceleration/deceleration mode;
obtaining planned driving trajectory information of the vehicle within a current control cycle;
sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as the initial control mode for the current control cycle; and
performing longitudinal control of the vehicle within the current control cycle according to the initial control mode and based on the planned driving trajectory information.

2. The method for longitudinal control of a vehicle according to claim 1, wherein the planned driving trajectory information comprises a plurality of target points arranged in chronological order, each of the target points comprising at least a target speed and a target acceleration of the vehicle at the moment corresponding to the target point, and the method further comprises determining the initial control mode for the current control cycle by:

step S11: determining whether the target speed satisfies the establishment condition for the parking mode; if the target speed satisfies the establishment condition for the parking mode, determining the parking mode as the initial control mode; if not, proceeding to step S12;

step S12: determining whether the target acceleration satisfies the establishment condition for the cruise control mode; if the target acceleration satisfies the establishment condition for the cruise control mode, determining the cruise control mode as the initial control mode; if not, proceeding to step S13; and

step S13: determining whether the target jerk derived from the target acceleration satisfies the establishment condition for the steady-state acceleration/deceleration mode;

if the target jerk satisfies the establishment condition for the steady-state acceleration/deceleration mode, determining the steady-state acceleration/deceleration mode as the initial control mode; if not, determining the transient-state acceleration/deceleration mode as the initial control mode.

3. The method for longitudinal control of a vehicle according to claim 1 or 2, wherein the method further comprises determining whether the driving trajectory parameter $p_{cur}$ of the vehicle within the current control cycle satisfies the establishment condition for its corresponding intelligent driving control mode by:

determining a lower limit $e_{th1}$ and an upper limit $e_{th2}$ of a parameter threshold, respectively, based on the type of the driving trajectory parameter $p_{cur}$;

comparing the driving trajectory parameter $p_{cur}$ with the lower limit $e_{th1}$ and the upper limit $e_{th2}$ of the parameter threshold;

if $p_{cur} < e_{th1}$ and this lasts for a preset duration, determining that the establishment condition is satisfied;

if $e_{th1} \leq p_{cur} \leq e_{th2}$ and the initial control mode for the previous control cycle is also the initial control mode corresponding to the driving trajectory parameter $p_{cur}$, determining that the establishment condition is satisfied; or

if $p_{cur} > e_{th2}$, determining that the establishment condition is not satisfied,

wherein when the driving trajectory parameter $p_{cur}$ is the target speed, the target acceleration, and the target jerk, respectively, the initial control mode corresponding to the driving trajectory parameter $p_{cur}$ is the parking mode, the cruise control mode, and the steady-state acceleration/deceleration mode, respectively.

4. The method for longitudinal control of a vehicle according to any of claims 1 to 3, wherein the step of "determine one intelligent driving control mode as the initial control mode for the current control cycle" specifically comprises:

step S21: setting an initial strategy for the intelligent driving control mode by:

obtaining planned driving trajectory information of the vehicle, wherein the planned driving trajectory information comprises a plurality of target points arranged in chronological order, each of the target points comprising at least a target position, a target speed, and a target acceleration of the vehicle at the moment corresponding to the target point;

performing proportional control on a position error determined based on the target position and the actual position of the vehicle to obtain a speed compensation value, performing proportional control on a speed error determined based on the target speed and the actual speed of the vehicle and the speed compensation value to obtain an acceleration compensation value, and performing proportional control on an acceleration error determined based on the target acceleration and the actual acceleration of the vehicle and the acceleration compensation value to obtain an acceleration feedback torque;

obtaining a compensated target acceleration based on the target acceleration of the vehicle and the acceleration compensation value, using the product of the compensated target acceleration and the vehicle mass as an acceleration resistance torque, and using the sum of the acceleration resistance torque and a driving resistance torque of the vehicle as an acceleration feedforward torque; and

determining a wheel torque of the vehicle based on the acceleration feedback torque and the acceleration feedforward torque;

step S22: using the initial strategy as a control strategy for the transient-state acceleration/deceleration mode, to form the transient-state acceleration/deceleration mode; and

step S23: adjusting the step of "determining a wheel torque of the vehicle based on the acceleration feedback torque and the acceleration feedforward torque" to form the parking mode, the cruise control mode, and the steady-state acceleration/deceleration mode, respectively, by:

performing integral control on the position error to obtain a position error integral torque, and determining the wheel torque of the vehicle based on the acceleration feedback torque, the acceleration feedforward torque, and the position error integral torque, to form the parking mode;

performing integral control on the speed error to obtain a speed error integral torque, and determining the wheel torque of the vehicle based on the acceleration feedback torque, the acceleration feedforward torque, and the speed error integral torque, to form the cruise control mode; and

performing integral control on the acceleration error to obtain an acceleration error integral torque, and determining the wheel torque of the vehicle based on the acceleration feedback torque, the acceleration feedforward torque, and the acceleration error integral torque, to form the steady-state acceleration/deceleration mode.

5. The method for longitudinal control of a vehicle according to any of claims 1 to 4, wherein the method further comprises: using the initial strategy as a control strategy for a longitudinal override mode for longitudinal control of the vehicle, to form the longitudinal override mode;

before the step of "sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle", the method further comprises:

determining whether an establishment condition for the longitudinal override mode is satisfied, wherein the establishment condition comprises that torque request information of the accelerator pedal of the vehicle is greater than torque request information determined by the planned driving trajectory information or that a torque intervention instruction output by the chassis stability control system of the vehicle is received, and the torque request information comprises acceleration information;

if the establishment condition for the longitudinal override mode is satisfied, using the longitudinal override mode as the initial control mode for the current control cycle, performing longitudinal control of the vehicle within the current control cycle according to the initial control mode and based on the torque request information of the accelerator pedal of the vehicle or the torque intervention instruction, and not performing the step of "sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as the initial control mode for the current control cycle" and the step of "performing longitudinal control of the vehicle within the current control cycle according to the initial control mode and based on the planned driving trajectory information";

if not, continuing with the step of "sequentially evaluating establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle".

6. The method for longitudinal control of a vehicle according to any of claims 1 to 4, wherein the step of "setting an initial strategy for the intelligent driving control mode" comprises:

upon detecting that the energy recovery torque provided by a motor on the vehicle cannot meet the required wheel torque of the vehicle, generating a brake pressure instruction based on the energy recovery torque, the wheel torque, and the compensated target acceleration, and sending the brake pressure instruction to a brake control unit of the vehicle, such that the brake control unit is able to control the vehicle to decelerate according to the brake pressure instruction.

7. The method for longitudinal control of a vehicle according to any of claims 1 to 4, wherein when the initial control mode for the current control cycle and the initial control mode for the previous control cycle are both intelligent driving control modes and the initial control mode for the current control cycle is the parking mode or the cruise control mode or the steady-state acceleration/deceleration mode, before the step of "performing longitudinal control of the vehicle within the current control cycle according to the initial control mode and based on the planned driving trajectory information", the method further comprises correcting the initial control mode for the current control cycle by:

determining whether the initial control mode for the current control cycle is the same as the initial control mode for the previous control cycle;

if the initial control mode for the current control cycle is the same as the initial control mode for the previous control cycle, making no correction; or

if the initial control mode for the current control cycle is not the same as the initial control mode for the previous control cycle, making corrections by:

obtaining a previous-cycle wheel torque for the longitudinal control of the vehicle in the previous control cycle;

obtaining the acceleration feedback torque and the acceleration feedforward torque obtained by performing longitudinal control of the vehicle based on the initial control mode and the planned driving trajectory information for the current control cycle;

calculating an initial value of integral control based on the previous-cycle wheel torque, the acceleration feedback torque, and the acceleration feedforward torque by using the following formula,

$$I = Tqpre - Tqfb - Tqff$$

wherein *I* represents the initial value of integral control, and *Tqpre, Tqfb,* and *Tqff* represent the previous-cycle wheel torque, the acceleration feedback torque, and the acceleration feedforward torque, respectively; and

performing integral control on the error term based on the initial value of integral control to obtain an error term integral torque, and determining the wheel torque of the vehicle based on the acceleration feedback torque, the acceleration feedforward torque, and the error term integral torque, to form a corrected initial control mode,

wherein when the initial control mode is the parking mode, the cruise control mode, and the steady-state acceleration/deceleration mode, respectively, the error term is the position error, the speed error, and the acceleration error, respectively, and the error term integral torque is the position error integral torque, the speed error integral torque, and the acceleration error integral torque, respectively.

**8.** The method for longitudinal control of a vehicle according to any of the preceding claims, wherein the method further comprises correcting the initial control mode for the current control cycle when torque transition control is not performed in the current control cycle by:

determining whether the entry condition for torque transition control is satisfied in the current control cycle;

if the entry condition for torque transition control is satisfied in the current control cycle, initiating a new round of torque transition control and correcting the initial control mode for the current control cycle to a transition control mode; or if the entry condition for torque transition control is not satisfied in the current control cycle, not initiating a new round of torque transition control and making no correction to the initial control mode for the current control cycle,

wherein

the transition control mode is: correcting, based on the previous-cycle wheel torque of the vehicle obtained in the previous control cycle and a preset torque change slope, a current-cycle wheel torque obtained based on the initial control mode and the planned driving trajectory information for the current control cycle, to narrow the gap between the previous-cycle wheel torque and the current-cycle wheel torque, and thereby performing longitudinal control of the vehicle based on the corrected current-cycle wheel torque;

and wherein if the initial control mode for the current control cycle contains an error term, the initial control mode is controlled to stop integral control of the error term, and when the initial control mode is the parking mode, the cruise control mode, and the steady-state acceleration/deceleration mode, respectively, the error term is the position error, the speed error, and the acceleration error, respectively; and

the entry condition comprises that the initial control modes for the current control cycle and the previous control cycle are the intelligent driving control mode and the longitudinal override mode, respectively, or the current control cycle is the first control cycle for longitudinal control of the vehicle, or the initial control mode for the current control cycle is the transient-state acceleration/deceleration mode and the initial control mode for the previous control cycle is the parking mode or the cruise control mode or the steady-state acceleration/deceleration mode.

**9.** The method for longitudinal control of a vehicle according to any of the preceding claims, wherein the method further comprises correcting the initial control mode for the current control cycle when torque transition control is performed in the current control cycle by:

determining whether the entry condition and the exit condition for torque transition control are satisfied in the current control cycle;

if both the entry condition and the exit condition are satisfied, making no correction to the initial control mode for the current control cycle and ending this round of torque transition control;

if the entry condition is satisfied and the exit condition is not satisfied, correcting the initial control mode for the current control cycle to the transition control mode;

if the entry condition is not satisfied and the exit condition is satisfied, making no correction to the initial control mode for the current control cycle and ending this round of torque transition control; or

if neither the entry condition nor the exit condition is satisfied, correcting the initial control mode for the current control cycle to the control mode actually used in the previous control cycle, wherein the control mode actually used is the initial control mode or the transition control mode,

wherein the exit condition comprises that

an absolute value of the deviation between wheel torques before and after corrections corresponding to the previous control cycle of the current control cycle is less than a preset deviation threshold, and

an absolute value of the deviation between wheel torques before and after corrections corresponding to the second control cycle counted down from the current control cycle is greater than or equal to a preset deviation threshold.

10. A computer device, comprising a processor and a storage apparatus configured to store a plurality of pieces of program codes, wherein the program codes are adapted to be loaded and executed by the processor to perform the method for longitudinal control of a vehicle according to any one of claims 1 to 9.

11. A non-transitory computer-readable storage medium having a plurality of pieces of program codes stored therein, wherein the program codes are adapted to be loaded and executed by a processor to perform the method for longitudinal control of a vehicle according to any one of claims 1 to 9.

12. A vehicle, comprising a computer device according to claim 10.

*FIG. 1*

Start

Set an intelligent driving control mode for longitudinal control of the vehicle, where the intelligent driving control mode comprises a parking mode, a cruise control mode, a steady-state acceleration/deceleration mode, and a transient-state acceleration/deceleration mode — S101

Obtain planned driving trajectory information of the vehicle within a current control cycle — S102

Sequentially evaluate establishment conditions for the parking mode, the cruise control mode, the steady-state acceleration/deceleration mode, and the transient-state acceleration/deceleration mode based on the planned driving trajectory information, to determine one intelligent driving control mode as an initial control mode for the current control cycle — S103

Perform longitudinal control of the vehicle within the current control cycle according to the initial control mode and based on the planned driving trajectory information — S104

End

*FIG. 2*

Start

S1031

An initial control
mode is the parking
mode ← Yes ← Determine
whether a target speed satisfies an establishment
condition for a parking mode

No

S1032

An initial control mode
is the cruise control
mode ← Yes ← Determine whether
a target acceleration satisfies an establishment condition
for a cruise control mode

No

S1033

An initial control mode
is the steady-state
acceleration/deceleration
mode ← Yes ← Determine whether
a target jerk satisfies an establishment condition for a
steady-state acceleration/deceleration
mode

No

An initial control mode is a transient-state
acceleration/deceleration mode

End

*FIG. 3*

```
                              ┌──────────┐
                              │  Start   │
                              └──────────┘
                                   │
                                   ▼
```

Obtain planned driving trajectory information of a vehicle, where the planned driving trajectory information comprises a plurality of target points arranged in chronological order, each of the target points comprising at least a target position, a target speed, and a target acceleration of the vehicle at a moment corresponding to the target point — S1011

Perform proportional control on a position error determined based on the target position and an actual position of the vehicle to obtain a speed compensation value — S1012

Perform proportional control on a speed error determined based on the target speed and an actual speed of the vehicle and the speed compensation value to obtain an acceleration compensation value — S1013

Perform proportional control on an acceleration error determined based on the target acceleration and an actual acceleration of the vehicle and the acceleration compensation value to obtain an acceleration feedback torque — S1014

Obtain a compensated target acceleration based on the target acceleration of the vehicle and the acceleration compensation value, use a product of the compensated target acceleration and a vehicle mass as an acceleration resistance torque, and use a sum of the acceleration resistance torque and a driving resistance torque of the vehicle as an acceleration feedforward torque — S1015

Determine a wheel torque of the vehicle based on the acceleration feedback torque and the acceleration feedforward torque — S1016

```
                              ┌──────────┐
                              │   End    │
                              └──────────┘
```

*FIG. 4*

EP 4 371 838 A1

FIG. 5

FIG. 6

26

FIG. 7

FIG. 8

Start

Obtain a previous-cycle wheel torque at the time of longitudinal control of a vehicle in a previous control cycle — S201

Obtain an acceleration feedback torque and an acceleration feedforward torque obtained by performing longitudinal control of the vehicle based on an initial control mode for a current control cycle and planned driving trajectory information — S202

Calculate an initial value of integral control based on the previous-cycle wheel torque, the acceleration feedback torque, and the acceleration feedforward torque — S203

Perform integral control on an error term based on the initial value of integral control to obtain an error term integral torque, and determine a wheel torque of the vehicle based on the acceleration feedback torque, the acceleration feedforward torque, and the error term integral torque, to form a corrected initial control mode — S204

End

*FIG. 9*

| Storage apparatus | ⟷ | Processor |

*FIG. 10*

*FIG. 11*

Europäisches
Patentamt

European
Patent Office

Office européen
des brevets

# EUROPEAN SEARCH REPORT

Application Number

**EP 23 21 0875**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/090800 A1 (MOBILEYE VISION TECHNOLOGIES LTD [IL]; BELMAN EFIM [IL] ET AL.) 5 May 2022 (2022-05-05) * paragraphs [0003], [0230], [0775], [0783] * ----- | 1,10-12 | INV. B60W50/00 |
| X | CN 113 928 304 A (SAIC MOTOR CORP LTD) 14 January 2022 (2022-01-14) * page 4 – page 5 * ----- | 1,10-12 | |
| A | FR 3 122 390 A1 (RENAULT SAS [FR]) 4 November 2022 (2022-11-04) * the whole document * ----- | 1-12 | |

TECHNICAL FIELDS
SEARCHED (IPC)

**B60W**

The present search report has been drawn up for all claims

| Place of search | Date of completion of the search | Examiner |
|---|---|---|
| Munich | 29 February 2024 | Stolle, Martin |

EPO FORM 1503 03.82 (P04C01)

## ANNEX TO THE EUROPEAN SEARCH REPORT
## ON EUROPEAN PATENT APPLICATION NO.

EP 23 21 0875

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2024

| Patent document cited in search report | | Publication date | Patent family member(s) | | Publication date |
|---|---|---|---|---|---|
| WO 2022090800 | A1 | 05-05-2022 | DE 112021005104 | T5 | 19-10-2023 |
| | | | US 2023286536 | A1 | 14-09-2023 |
| | | | WO 2022090800 | A1 | 05-05-2022 |
| CN 113928304 | A | 14-01-2022 | NONE | | |
| FR 3122390 | A1 | 04-11-2022 | CN 117279816 | A | 22-12-2023 |
| | | | EP 4334180 | A1 | 13-03-2024 |
| | | | FR 3122390 | A1 | 04-11-2022 |
| | | | KR 20240005836 | A | 12-01-2024 |
| | | | WO 2022233739 | A1 | 10-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211451675